(19) Europäisches Patentamt

European Patent Office

Office européen des brevets

(11) **EP 1 113 338 A2**

(12) **EUROPEAN PATENT APPLICATION**

(43) Date of publication:
    **04.07.2001 Bulletin 2001/27**

(51) Int Cl.⁷: **G03G 5/10**, B29C 45/26

(21) Application number: **00311715.7**

(22) Date of filing: **27.12.2000**

(84) Designated Contracting States:
    **AT BE CH CY DE DK ES FI FR GB GR IE IT LI LU
    MC NL PT SE TR**
    Designated Extension States:
    **AL LT LV MK RO SI**

(30) Priority: **27.12.1999 JP 37126499**
    **28.12.1999 JP 37261699**
    **27.12.1999 JP 36931499**
    **27.12.1999 JP 36931699**

(71) Applicant: **Bridgestone Corporation
    Tokyo (JP)**

(72) Inventors:
    • **Iizuka, Munenori
      Tokyo (JP)**
    • **Machida, Kunio
      Tokyo (JP)**

(74) Representative: **Stoner, Gerard Patrick et al
    MEWBURN ELLIS
    York House
    23 Kingsway
    London WC2B 6HP (GB)**

(54) **Resin pipe, production thereof, base for photosensitive drums, and photosensitive drum constructed from said base**

(57)    Disclosed herein are a resin pipe, a process for production thereof, a base for a photosensitive drum, and a photosensitive drum formed from said base, said photosensitive drum being used for electrophotographic apparatus such as copying machines, facsimiles, and printers. The base has a tapered inner surface with a specific taper angle (θ). The base also has a projection formed at a specific position. The base is formed from a specific molding material.

EP 1 113 338 A2

**Description**

BACKGROUND OF THE INVENTION

The present invention relates to a resin pipe, a process for production thereof, a base for photosensitive drums, and a photosensitive drum constructed from said base, said photosensitive drum being used for electrophotographic apparatus such as copying machines, facsimiles, and printers.

The electrostatic recording process for copying machines, facsimiles, and printers consists of several steps. First, the photosensitive drum has its surface electrostatically charged uniformly. The charged surface of the photosensitive drum is exposed to an image projected from an optical system. The exposed part loses charge, thereby forming an electrostatic latent image, which is subsequently supplied with a toner. The toner electrostatically sticks to the photosensitive drum, thereby forming a toner image. Finally, the toner image is transferred for printing to a recording medium such as paper, OHP, photographic paper.

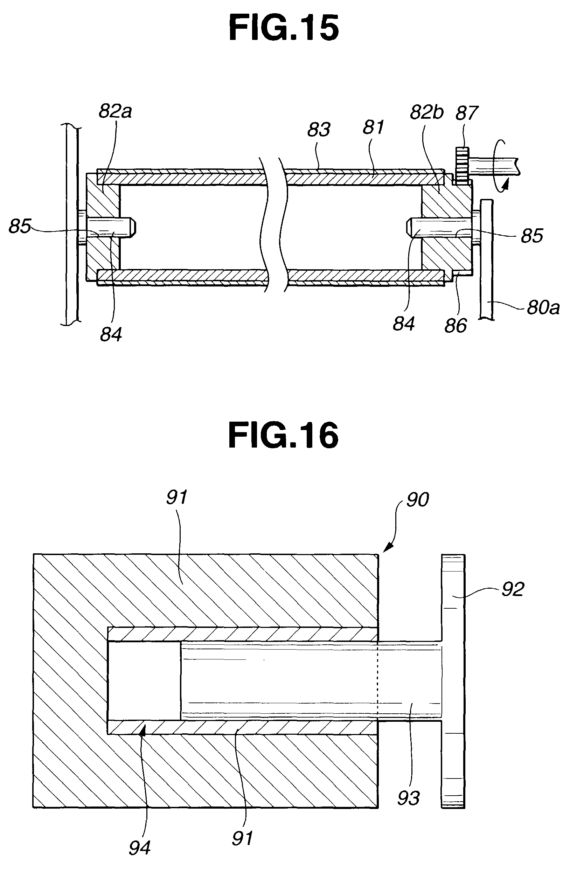

The above-mentioned electrostatic recording process usually employs a photosensitive drum which is constructed as shown in Fig. 15.

The photosensitive drum consists of a cylindrical base 81 having good conductivity, flanges 82a and 82b firmly fitted into both ends of thereof, and a photosensitive layer 83 formed on the outer surface thereof. As shown in Fig. 15, the photosensitive drum is rotatably supported by shafts 84 and 84, which are inserted into holes 85 and 85 in the flanges 82a and 82b and attached to the main body 80a of the electrophotographic apparatus. The photosensitive drum is turned by a motor through a driving gear 87 and a driven gear 86 formed on the flange 82b.

After research on said cylindrical base, the present inventors proposed a photosensitive drum constructed from a cylindrical base which is a molded product of an electrically conductive resin compound containing a polyamide resin. (Japanese Patent Application No. Hei. 11-241247).

This photosensitive drum is characterized by light weight and high strength because it is constructed from a cylindrical base made of a resin compound readily applicable to injection molding and superior in surface smoothness and mechanical strength.

Meanwhile, the above-mentioned resin pipe (as the cylindrical base) is produced by injection molding which employs a mold of side-gate type (in which the gate leads to the lateral face of the cavity). An example of such a mold is shown in Fig. 16 denoted by the reference numeral 90.

The mold 90 consists of a mold proper 91 having a cylindrical hollow therein and a core 93. The core 93 consists of a plunger movably inserted into the hollow in the axial direction from its open end and a flange 92 which comes into contact with one end of the mold proper 91, thereby closing the open end of the hollow. Between the inner surface of the mold proper 91 and the outer surface of the core 93 is formed a cylindrical cavity 94. The resin pipe (or the cylindrical base) is produced by admitting the injected material into this cavity 94 through the gate (not shown).

The disadvantage of the above-mentioned method is that the molded resin pipe shrinks in diameter and hence comes into close contact with the outer surface of the core, thereby making it difficult to pull out the core.

One way proposed to solve this problem involved in demolding is to taper the inner surface of the cylindrical base (or the molded product), thereby facilitating demolding.

However, the problem is not solved completely in this way. A steep taper makes the ends of the cylindrical base greatly vary in wall thickness. This leads to unstable dimensional accuracy due to shrinkage after demolding. Thus the resulting molded product lacks uniformity in mechanical and electrical properties, and hence it is not suitable for use as the base for photosensitive drums. A moderate taper, however, does not facilitate demolding as desired.

The problem involved in tapering arises also in the case where the resin pipe is molded from the above-mentioned electrically conductive resin compound. The resin pipe suffers difficulty in demolding and has poor dimensional accuracy due to shrinkage after demolding and also has uneven physical properties. The resin pipe with these shortcomings makes the photosensitive drum constructed therefrom poor in printing performance.

On the other hand, the above-mentioned cylindrical base 81 is conventionally made of aluminum alloy on account of its light weight, good machinability, and high electrical conductivity.

Unfortunately, the cylindrical base of aluminum alloy needs precision machining to meet stringent requirements, such as dimensional accuracy and prescribed surface roughness, and to permit the flanges 82a and 82b to fit into its ends. It occasionally needs treatment to prevent its surface oxidation. Such additional processes lead to high production cost, and hence aluminum alloy is not necessarily a satisfactory material for the cylindrical base constituting the photosensitive drum.

Meanwhile, it has been practiced to produce a photosensitive drum by forming a photosensitive layer on the outer surface of a cylindrical base which is a resin pipe molded from an electrically conductive resin compound composed of a thermoplastic resin and carbon black (as a conducting material) mixed therewith and dispersed therein.

The photosensitive drum formed from the resin base dispenses with many steps required of the aluminum alloy base and contributes to weight reduction.

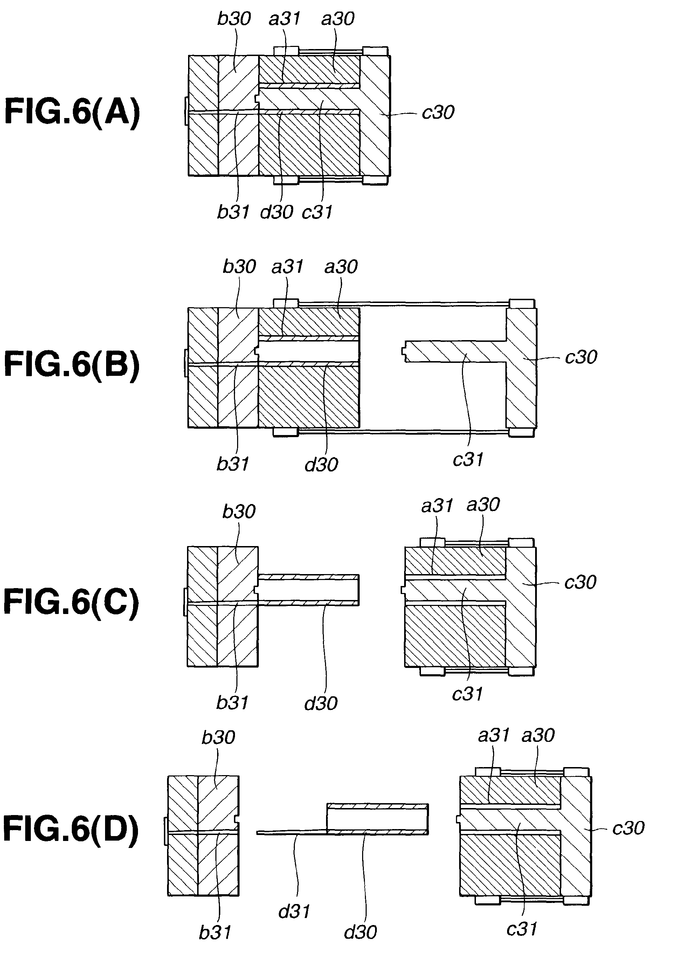

The resin pipe as the cylindrical base for photosensitive drums is usually produced by injection molding as shown in Fig. 6. This injection molding employs a mold consisting of a first movable plate a30, a stationary plate b30, and a second movable plate c30, as shown in Fig. 6(A). The first movable plate a30 has a cylindrical hollow with open ends. The stationary plate b30 has a sprue b31. The second movable plate c30 has a cylindrical core c31. The mold is assembled in such a way that one end of the first movable plate a30 comes into contact with the stationary plate b30 and the other end of the first movable plate a30 comes into contact with the second movable plate c30, with the core c31 inserted into the cylindrical hollow. The assembled mold has a cylindrical cavity a31 formed between the outer surface of the core c31 and the inner surface of the first movable plate a30. A molten resin is admitted (injected) into the cylindrical cavity a31 through the sprue b31, so that a resin pipe d30 is formed. Then, the second movable plate c30 is separated from the first movable plate a30 so that the core c31 is pulled away from the resin pipe d30, as shown in Fig. 6(B). Subsequently, the first movable plate a30 is separated from the stationary plate b30 so that the resin pipe d30 is demolded while being retained by the stationary plate b30, as shown in Fig. 6(C). Finally, the resin pipe d30 is removed, together with the sprue d31, from the stationary plate b30, as shown in Fig. 6(D). The sprue d31 is cut off to complete the resin pipe d30.

Production of the resin pipe (as the cylindrical base for the photosensitive drum) by the above-mentioned method is sometimes poor in productivity on account of troubles in the injection molding steps shown in Fig. 6.

The resin pipe d30 formed by injection molding as mentioned above is subject to shrinkage as is the case with any injection-molded product which shrinks as the resin cools and solidifies after molding. Shrinkage causes the resin pipe d30 to decrease in diameter. As the result, the resin pipe d30 firmly sticks to the core c31 of the second movable plate c30, and the resin pipe d30 is pulled away, together with the core c31, from the first movable plate a30 when the second movable plate c30 is separated from the first movable plate a30 in the step shown in Fig. 6(B). This trouble makes it necessary to suspend automatic molding operation, which decreases productivity.

There has been proposed an idea of producing the cylindrical base from an injection molding material (such as plastics) in such a way that the cylindrical base has a tapered inner surface to facilitate demolding after injection.

This type of cylindrical base presents difficulties in fitting flanges into its open ends or allowing fitted flanges to remain in its open ends.

One proposed solution to this problem is a cylindrical base whose inner surface consists of a tapered zone and a flat zone. A problem involved with this type of cylindrical base is that it is difficult to provide the flange with a driving gear in alignment with the center line of the cylindrical base.

On the other hand, it is common practice to produce the photosensitive drum by coating the outer surface of the resin pipe (as the cylindrical base 81) with the photosensitive layer 83, said resin pipe being formed by injection molding from an electrically conductive resin compound containing a conducting material (such as carbon black) dispersed therein. In this case, it is also common practice to form at least either of the flanges 82a and 82b integrally with the base 81 made of the resin compound. The integrally formed flange may have the driving gear 86 which is formed integrally therewith.

Constructing the photosensitive drum from the base of resin compound obviates many steps required for the base of aluminum alloy and also contributes to weight reduction. Moreover, the flange and driving gear which are formed integrally with the base ensure stable continuity through them.

The photosensitive drum having the flange and driving gear integrally formed with the cylindrical base does not necessarily have high performance because their requirements are different.

The cylindrical base 81 has the photosensitive layer 83 formed on its outer surface, as shown in Fig. 15. The cylindrical base 81 is required to have a high degree of surface smoothness for good coatability so that the resulting photosensitive layer 83 forms high-quality images thereon. In addition, the cylindrical base 81 is required to have high dimensional stability (straightness and roundness) be uniform in outer diameter. By contrast, the flange and driving gear are required to have sufficient rigidity to stably support and drive the cylindrical base and also to have sufficient wear resistance for their sliding on the supporting axle and other gears.

The cylindrical base, flange, and driving gear differ in their requirements which are hardly met simultaneously if they are molded integrally. Therefore, an integrally molded photosensitive drum does not necessarily have high performance.

## SUMMARY OF THE INVENTION

The present invention has been completed in view of the foregoing. It is a first object of the present invention to provide a resin pipe, particularly the one suitable for use as the base for photosensitive drums for electrophotographic apparatus such as copying machines, facsimiles, and printers. This resin pipe permits easy demolding and efficient production without variation in physical properties.

It is a second object of the present invention to provide a resin pipe and a method for production thereof. The resin pipe is suitable for use as the cylindrical base for photosensitive drums. It can be demolded smoothly and hence can be produced efficiently.

It is a third object of the present invention to provide a base of the photosensitive drum for copying machines, facsimiles, and printers. This base permits a flange meshing with a gear to be fitted thereinto easily, or this base may have a gear attached in alignment with the center line.

It is a fourth object of the present invention to provide a high-performance photosensitive drum consisting of a cylindrical base, flange, and driving gear which are integrally molded from a resin without any loss of their respective properties. This photosensitive drum is characterized by good continuity, light weight, and easy fabrication.

The above-mentioned objects have been achieved as the present inventors succeeded with the resin pipe and its production, the base for photosensitive drums, and the photosensitive drum constructed of the base.

In order to achieve the first object mentioned above, the present inventors carried out extensive studies to find out that a resin pipe can be demolded easily if its inner surface is tapered such that the following equation is satisfied.

$$0.5 \times 10^{-3} < \tan \theta < 3.5 \times 10^{-3}$$

where θ is the angle of taper. Easy demolding permits the resin pipe to be produced efficiently without variation in characteristic properties. Therefore, the resin pipe permits easy demolding and efficient production without variation in physical properties and is useful as the base of the photosensitive drum to give high printing performance.

In order to achieve the above-mentioned second object, the present inventors carried out extensive studies to find out that the resin pipe can be produced efficiently by injection molding from a thermoplastic resin or a resin compound based on a thermoplastic resin if a special mold mentioned below is employed. The mold consists of one stationary plate and two movable plates. The first movable plate has a cylindrical hollow therein, and the second movable plate has a cylindrical core which is inserted into the cylindrical hollow in the first movable plate, so that a cylindrical cavity is formed between the first and second movable plates. The cylindrical hollow slightly expands in its radial direction at its one end in contact with the stationary plate. When the cylindrical cavity is filled with a molten resin, this expanded part forms a radial projection at the end of the circumference of the resin pipe. This projection prevents the molded resin pipe from being pulled away together with the core from the first movable plate when the second movable plate is withdrawn from the first movable plate. Thus, this specially designed mold realizes smooth molding operation - from injection to demolding - without the possibility of the molded resin pipe being pulled away from the first movable plate at the time of demolding. In this way it is possible to produce the resin pipe efficiently.

In order to achieve the above-mentioned third object, the present inventors carried out extensive studies to find out that the base for photosensitive drums can be produced efficiently from a thermoplastic resin or a resin compound based on a thermoplastic resin if it is constructed as follows. The base has two open ends, and at least one open end is closed by a flange fitted thereinto, the flange meshing with a gear to drive the base. The base also has a tapered inner surface which facilitates demolding after molding. The inner surface is not tapered throughout its entire length. Instead, that part of the inner surface which is close to the end of the base is parallel to the axis and has an even diameter. This part is slightly longer than that part of the flange which is fitted into the base. The advantage of this structure is that the base can be demolded easily owing to its tapered inner surface, the parallel part of the inner surface facilitates the fitting of the flange, and the flange permits a gear to be attached thereto in alignment with the axis of the base (in the case where the flange is formed separately from the gear) or the flange and gear can be fitted stably (in the case where the flange is formed integrally with the gear).

In order to achieve the above-mentioned fourth object, the present inventors carried out extensive studies to find out that it is possible to produce a high-performance photosensitive drum at a low price if the cylindrical resin pipe (as the base of the photosensitive drum) of the following structure is formed from different kinds of resin materials. The cylindrical resin pipe has, at least one end thereof, a resin flange formed integrally therewith, and the flange has a driving gear formed integrally therewith. The cylindrical resin pipe has its outer surface coated with a photosensitive layer so that it functions as a photosensitive drum. The driving gear or the flange having a driving gear formed integrally therewith is formed from a resin material which is different from the one from which the resin pipe is formed. In other words, the resin pipe (or the cylindrical base of the photosensitive base) is formed from a resin material superior in dimensional accuracy, dimensional stability, and surface smoothness.

The driving gear or the flange is formed from a resin material superior in rigidity and wear resistance. The resulting photosensitive drum has high performance (such as good continuity between parts, light weight, and easy fabrication) without individual parts decreasing in their performance.

The present invention provides a resin pipe, a method for producing the resin pipe, a base for a photosensitive drum, and a photosensitive drum constructed of the base, which are explained in the following.

The first aspect of the present invention is directed to a resin pipe which is formed by injection molding from a thermoplastic resin or a resin compound based on a thermoplastic resin, wherein the resin pipe has a tapered inner surface to facilitate demolding such that the taper angle (θ) satisfies the following equation.

$$0.5 \times 10^{-3} < \tan \theta < 3.5 \times 10^{-3}$$

The second aspect of the present invention is directed to the resin pipe as defined in the first aspect of the present invention which is an electrically conductive resin pipe formed by injection molding from an electrically conductive resin compound composed of a thermoplastic resin and a conducting material dispersed therein.

The third aspect of the present invention is directed to the resin pipe as defined in the first aspect of the present invention which is formed from a resin compound containing at least one resin component selected from a polyamide resin obtained from metaxylylenediamine and adipic acid, a polyamide resin obtained from $\varepsilon$-caprolactam, and an alloy resin obtained by blending a polyamide resin with a resin having a water absorption no higher than 0.3%.

The fourth aspect of the present invention is directed to the resin pipe as defined in the first aspect of the present invention which contains a reinforcing inorganic filler dispersed therein.

The fifth aspect of the present invention is directed to the resin pipe as defined in the first aspect of the present invention which is a base for a photosensitive drum.

The sixth aspect of the present invention is directed to a resin pipe formed by injection molding from a thermoplastic resin or a resin compound based on a thermoplastic resin, the rein pipe having an integrally molded projection radially protruding outward from one end of its outer surface.

The seventh aspect of the present invention is directed to the resin pipe as defined in the sixth aspect of the present invention, wherein the projection is a flange-like one formed on the entire circumference of one end of the outer surface.

The eighth aspect of the present invention is directed to the resin pipe as defined in the sixth aspect of the present invention, which is a cylindrical base for the photosensitive drum to be mounted in electrophotographic apparatus or electrostatic recording apparatus.

The ninth aspect of the present invention is directed to the resin pipe as defined in the sixth aspect of the present invention, which is formed from a resin compound containing as the thermoplastic resin at least one species selected from a polyamide resin obtained from metaxylylenediamine and adipic acid, a polyamide resin obtained from $\varepsilon$-caprolactam, and an alloy resin obtained by blending a polyamide resin with a resin having a water absorption no higher than 0.3%.

The tenth aspect of the present invention is directed to a method of producing a resin pipe by injection molding which employs a mold consisting of a first movable plate having therein a cylindrical hollow with open ends, a stationary plate having a sprue for injection of molten resin therethrough, and a second movable plate having a cylindrical core, such that, when in operation, the first movable plate comes into contact with the stationary plate and the cylindrical core enters the cylindrical hollow in the first movable plate, thereby forming a cylindrical cavity between the inner surface of the first movable plate and the outer surface of the core, the injection molding consisting of the steps of injecting a molten resin into the cavity, thereby forming a resin pipe and demolding the thus formed resin pipe by separating the second movable plate from the first movable plate in such a way that the core is pulled away from the resin pipe and separating the first movable plate from the stationary plate, while the resin pipe being held by the stationary plate, the method being characterized in that the cylindrical hollow in the first movable plate has a circular recess on its periphery adjacent to the stationary plate, the circular recess forms during injection molding a projection protruding radially from the periphery at one end of the resin pipe, the projection preventing the resin pipe from being pulled away together with the core when the second movable plate is separated from the first movable plate.

The eleventh aspect of the present invention is directed to a cylindrical base for photosensitive drums which is obtained by injection molding from a thermoplastic resin or a resin compound based on a thermoplastic resin, the cylindrical base having a flange fitted into at least one end thereof to close it, the flange meshing with a gear to drive the cylindrical base, characterized in that the cylindrical base has a tapered inner surface to facilitate demolding after injection molding, the tapered inner surface having a part which is parallel to the axis, uniform in diameter, and slightly longer than that part of the flange which is fitted into the base.

The twelfth aspect of the present invention is directed to the cylindrical base for photosensitive drums as defined in the eleventh aspect of the present invention, which has a flange formed integrally with one opening thereof.

The thirteenth aspect of the present invention is directed to the cylindrical base for photosensitive drums as defined in the eleventh aspect of the present invention, in which the flange formed integrally with one opening thereof is provided with a driving gear.

The fourteenth aspect of the present invention is directed to the cylindrical base for photosensitive drums as defined in the eleventh aspect of the present invention, which is an electrically conductive base formed by injection molding from an electrically conductive resin compound composed of a thermoplastic resin and a conducting material dispersed therein.

The fifteenth aspect of the present invention is directed to the cylindrical base for photosensitive drums as defined in the eleventh aspect of the present invention, in which the resin compound contains as a component a polyamide resin obtained from metaxylylenediamine and adipic acid and/or a polyamide resin obtained from ε-caprolactam.

The sixteenth aspect of the present invention is directed to the cylindrical base for photosensitive drums as defined in the eleventh aspect of the present invention, in which the resin compound contains a reinforcing inorganic filler dispersed therein.

The seventeenth aspect of the present invention is directed to a cylindrical base for photosensitive drums which has at least one end thereof a resin flange formed integrally therewith, the flange having a driving gear formed integrally therewith, characterized in that the driving gear or the flange having the driving gear formed integrally therewith is formed from a resin material which is different from that from which the resin pipe is formed.

The eighteenth aspect of the present invention is directed to the cylindrical base of photosensitive drums as defined in the seventeenth aspect of the present invention, wherein the resin pipe proper and the driving gear or the flange having the driving gear formed integrally therewith are formed by two-color molding or insert molding.

The nineteenth aspect of the present invention is directed to the cylindrical base for photosensitive drums as defined in the seventeenth aspect of the present invention wherein the resin pipe proper is formed from a resin material containing at least one species selected from a polyamide resin obtained from metaxylylenediamine and adipic acid, a polyamide resin obtained from ε-caprolactam, and an alloy resin obtained by blending a polyamide resin with a resin having a water absorption no higher than 0.3%.

The twentieth aspect of the present invention is directed to the cylindrical base for photosensitive drums as defined in the seventeenth aspect of the present invention, wherein the driving gear or the flange having the driving gear formed integrally therewith is formed from a resin material which contains one or more species selected from polyacetal, polyamide, polyurethane, polyester, polyethylene, polypropylene, polycarbonate, polybutylene terephthalate, polyphenylene sulfide, polyamideimide, and polyimide.

The twenty-first aspect of the present invention is directed to a photosensitive drum consisting of a cylindrical base and a photosensitive layer coated on the outer surface thereof, characterized in that the cylindrical base is formed from the cylindrical base for photosensitive drum as defined in the seventeenth aspect of the present invention.

BRIEF DESCRIPTION OF THE DRAWINGS

Fig. 1 is a schematic sectional view showing one example of the molding of the resin pipe according to the first aspect of the present invention.

Fig. 2 is a schematic sectional view showing one example of the photosensitive drum whose base is the resin pipe according to the first aspect of the present invention.

Fig. 3 is a partly enlarged sectional view showing the resin pipe according to the second aspect of the present invention.

Fig. 4 is a partly enlarged sectional view showing the photosensitive drum formed by forming a photosensitive layer on the resin pipe.

Fig. 5 is a schematic sectional view showing the demolding step in the injection molding of the resin pipe.

Fig. 6 is a schematic sectional view showing the general procedure for the injection molding of the resin pipe.

Fig. 7 is a schematic sectional view showing one example of the base for photosensitive drums according to the third aspect of the present invention.

Fig. 8 is a schematic sectional view showing one example of the base for photosensitive drums in Example 2 according to the third aspect of the present invention.

Fig. 9 is a schematic sectional view showing another example of the base for photosensitive drums in Example 3 according to the third aspect of the present invention.

Fig. 10 is a schematic sectional view showing another example of the base for photosensitive drums in Example 4 according to the third aspect of the present invention.

Fig. 11 is a schematic sectional view showing another example of the base for photosensitive drums in Example 5 according to the third aspect of the present invention.

Fig. 12 is a schematic sectional view showing another example of the base for photosensitive drums in Example 6 according to the third aspect of the present invention.

Fig. 13 is a schematic sectional view showing another example of the base for photosensitive drums in Example 7 according to the third aspect of the present invention.

Fig. 14 is a schematic sectional view showing one embodiment of the base for photosensitive drums according to the fourth aspect of the present invention.

Fig. 15 is a schematic diagram showing the conventional base of photosensitive drums.

Fig. 16 is a partial schematic sectional view showing one embodiment of the base for photosensitive drums according to the present invention.

## DETAILED DESCRIPTION OF THE PREFERRED EMBODIMENTS

The invention will be described in more detail with reference to the accompanying drawings.

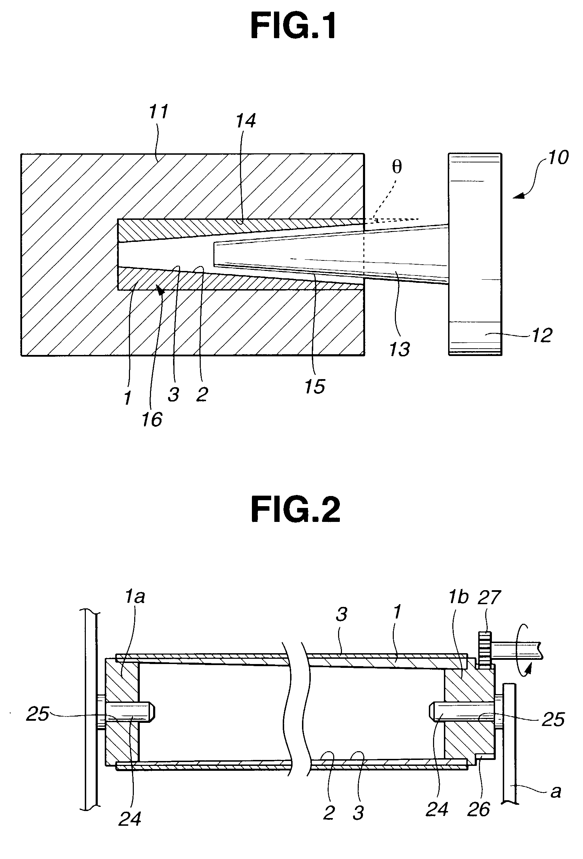

The first object of the present invention is achieved by providing a resin pipe. As shown in Fig. 1, this resin pipe 1 is formed such that its inner surface 2 is tapered so as to facilitate demolding. The taper 3 has a specific angle (θ) as explained later.

The resin pipe 1 according to the present invention is obtained by injection molding from a thermoplastic resin or a resin compound based on a thermoplastic resin. The resin component is not specifically restricted so long as it is capable of injection molding. An adequate one should be selected according to the shape and use of the resin pipe to be produced by injection molding.

In the case where the resin pipe is used as the base for photosensitive drums, the resin pipe should be formed from a polyamide resin (PA) such as nylon resins because of high mechanical strength and good surface smoothness suitable for forming the photosensitive layer thereon. Preferable among polyamide resins is the one which is selected from a polyamide resin obtained from metaxylylenediamine and adipic acid, a polyamide resin obtained from ε-caprolactam, and an alloy resin obtained by blending a polyamide resin with a resin having a water absorption no higher than 0.3%. The polyamide resin obtained by polycondensation reaction from metaxylylenediamine and adipic acid is generally called nylon MXD6. The polyamide resin obtained from ε-caprolactam by ring-opening polymerization reaction is generally called nylon-6.

According to the present invention, an alloy resin is used in the form of a blend of a polyamide resin with a resin having a water absorption no higher than 0.3%, for the reasons mentioned in the following.

There has been proposed an idea of forming the cylindrical base from a polyamide-based electrically conductive resin. The polyamide resin (PA) for this purpose has a higher water absorption (measured according to ASTM D-570) than other resins. For example, PA66 has a value of about 0.6-3% and PA6 has a value of 0.7-1.8%. Molded products with such a high water absorption may pose a problem with dimensional accuracy. That is, they expand due to water absorption when they are allowed to stand in a high-temperature high-humidity atmosphere such as at 30°C and above and 90 %RH and above for 2-3 hours. Expansion may adversely affect the function of the photosensitive body and hence greatly aggravates the image quality.

According to the present invention, the polyamide resin having a high water absorption is blended with a resin having a water absorption no higher than 0.3%, and the resulting alloy resin is used as the base material. The resulting resin compound has a low water absorption and is little subject to dimensional change in a high-temperature high-humidity environment.

The polyamide resin for the alloy resin may be any known polyamide resin, such as nylon MXD6, nylon-6, nylon-11, nylon-12, nylon-46, nylon-66, nylon-610, nylon-612, nylon-1212, and copolymers thereof. There are no specific restrictions on their selection.

The resin having water absorption no higher than 0.3% for the alloy resin (referred to as the blending resin) includes PP (polypropylene), PPE (polyphenylene ether), and PPS (polyphenylene sulfide), with the second and third being preferable and the second being most desirable.

The alloy resin according to the present invention may be obtained by blending a polyamide resin (such as PA66) with a resin having a water absorption no higher than 0.3%. The amount of the latter should usually be 1-70 weight%, preferably 5-50 weight%, and more preferably 10-40 weight%.

Blending may be facilitated by the aid of a compatibilizing agent to improve the compatibility of the two resin components. Good compatibility contributes to good dispersion, good mechanical properties (mechanical strength), water absorption, and high chemical resistance. Examples of the compatibilizing agent include maleic acid-modified polypropylene (PP) for the PA-PP system and a copolymer of epoxy-modified polystyrene (PS) and polymethyl methacrylate (PMMA) for the PA-PPS system or PA-PPE system.

The alloy resin composed of the polyamide resin and the blending resin gives a molded product which has better dimensional stability than that obtained from the polyamide resin alone, as mentioned above. This is demonstrated by Referential Examples as shown in Table 1 below. The water absorption and dimensional change in Table 1 are expressed in terms of difference between values measured before and after standing for 24 hours in a high-temperature high-humidity bath at 50°C and 95 %RH. It is noted that the water absorption and dimensional stability of the molded product under a high-temperature high-humidity condition are greatly improved when the polyamide resin is blended with the blending resin having a low water absorption.

Table 1

| | | Resin (weight%) | | | | Conducting material (weight%) | Reinforcing material (weight%) | Water absorption (%) | Dimensional change (%) |
|---|---|---|---|---|---|---|---|---|---|
| | | PA 66 | PPE | PPS | PP | Ketjen black | Potassium titanate whisker | ASTM D-570 | Dimensional change in flow direction |
| Water absorption (%) ASTM D-570 | | 1.80 | 0.10 | 0.02 | 0.01 | | | | |
| Referential example | 1 | 70 | | | | 10 | 10 | 1.6 | 1.12 |
| | 2 | 70 | | | | 10 | 20 | 1.5 | 1.05 |
| | 3 | 70 | | | | 10 | 30 | 1.3 | 0.95 |
| | 4 | 42 | 28 | | | 10 | 20 | 0.4 | 0.3 |
| | 5 | 42 | | 28 | | 10 | 20 | 0.2 | 0.2 |
| | 6 | 42 | | | 28 | 10 | 20 | 0.3 | 0.4 |

According to the present invention, the molding material may be a mixture of resins or a mixture of the above-mentioned nylon MXD6, nylon-6 and/or the alloy resin obtained by blending the polyamide resin with a resin having a water absorption of 0.3% or less with another resin. Examples of another resin include nylon-11, nylon-12, nylon-46, nylon-66, nylon-610, nylon-612, nylon-1212, or a copolymer thereof. Their mixing ratio is not specifically restricted. However, it is desirable that the nylon MXD6 or nylon-6 or the alloy resin obtained by blending the polyamide resin with a resin having a water absorption of 0.3% or less or a mixture thereof should account for 30-100 weight%, preferably 40-100 weight%, in the mixture.

In the case where the resin pipe is used for applications which need electrical conductivity, the above-mentioned thermoplastic resin may be incorporated with an electrically conducting material to impart electrical conductivity to form an electrically conducting resin compound.

The electrically conductive material is not specifically restricted so long as it is capable of uniform dispersion into the above-mentioned resin. It includes, for example, carbon black, graphite, metal power such as aluminum powder, copper powder, nickel powder, and electrically conductive glass powder. Carbon black is preferable. The amount of the electrically conductive material is not specifically restricted; for use as a base for a photosensitive drum, it may range from 5-30 weight%, particularly 5-20 weight%, of the compound. The amount should be such that the resin pipe has a surface resistance not higher than $10^6$ Ω/□, preferably not higher than $10^5$ Ω/□, measured according to ASTM D-257.

In addition, the thermoplastic resin may be incorporated with a variety of inorganic fillers (such as fibers) for reinforcement and extension. Examples of inorganic fillers include carbon fiber, electrically conductive or non-conductive whisker, and electrically conductive or non-conductive glass fiber. The electrically conductive fibers may also serve as the conducting material. In the case where electrically conductive fiber is used, the conducting material should be used in a reduced amount.

The inorganic filler is used in varied amounts without restrictions according to its kind and fiber length and diameter and strength to be required for the resin pipe. It should be added in an amount of 1-30 weight%, preferably 5-25 weight%, more preferably 10-25 weight%, of the resin compound. According to the present invention, the inorganic filler remarkably improves the strength and stiffness of the molded product without adverse effect on its surface smoothness.

The above-mentioned thermoplastic resin for molding may be incorporated with, in addition to the above-mentioned conducting material and inorganic filler, any known additives, such as polytetrafluoroethylene (PTFE), silicone, molybdenum disulfide, ($MoS_2$), and metal soap, in an adequate amount. Moreover, the above-mentioned conducting material and inorganic filler may be given surface treatment with silane coupling agent or titanate coupling agent.

What is mentioned above of injection molding materials and additives for them (kind, amount, and method of incorporation), which are used in the first aspect of the present invention, is also applicable to the second to fourth aspects of the present invention which will be explained later. What is mentioned above of the resin pipe and the material of the cylindrical base of photosensitive drums is not repeated in the second to fourth aspects of the present invention which will be explained later.

The resin pipe according to the present invention is produced by the method explained below with reference to Fig. 1. Fig. 1 shows a mold 10 used to produce the resin pipe 1 by injection molding. The mold 10 consists of a mold proper 11, an auxiliary member 12, and a core 13. The mold proper 11 has a cylindrical hollow therein. The auxiliary member 12 comes into contact with one end of the mold proper 11 so as to close the opening of the cylindrical hollow. The core 13 is movable in the axial direction so that it is inserted into the cylindrical hollow.

When in operation, the mold 10 is assembled by inserting the core 13 into the cylindrical hollow of the mold proper 11 and closing the opening of the cylindrical hollows with the auxiliary member 12. The core 13 is inserted until its end comes into contact with the bottom of the cylindrical hollow, so that the cavity 16 is formed. The resin pipe of the present invention is formed by injecting the above-mentioned material into this cavity 16.

The resin pipe 1 according to the first aspect of the present invention has its inner surface adequately tapered so as to facilitate demolding after injection.

According to the present invention, the taper angle ($\theta$). should be within the range specified by the equation $0.5 \times 10^{-3} < \tan \theta < 3.5 \times 10^{-3}$, particularly by the equation $1.0 \times 10^{-3} < \tan \theta < 2.5 \times 10^{-3}$. With a steep taper angle (or $\tan \theta$ is not smaller than $3.5 \times 10^{-3}$), the resin pipe is not uniform in physical properties (conductivity, strength, and shrinkage) in the lengthwise direction, and this adversely affects the electrical properties and dimensional accuracy of the resin pipe to be used as the base for photosensitive drums. With a mild taper angle (or $\tan \theta$ is not larger than $0.5 \times 10^{-3}$), the resin pipe is not readily demolded, and this adversely affects the moldability. Incidentally, the taper angle shown in Fig. 1 is exegerated to illustrate that the inner surface of the resin pipe is tapered and hence it does not represents an actual taper angle. The resin pipe according to the first aspect of the present invention has a taper angle ($\theta$) such that $\tan \theta$ is within the above-mentioned range.

The mold 10 used to produce the resin pipe according to the first aspect of the present invention is constructed such that the outer surface 15 of the core 13 determines the taper angle of the inner surface of the resin pipe. Therefore, the core 13 should have the same taper angle as the inner surface of the resin pipe, and hence it is easy to establish the taper angle.

The above-mentioned mold 10 has a sprue for providing molding materials to the cavity, gate, ejector pin, etc. as in ordinary injection molds; however, they are not shown herein.

The resin pipe according to the first aspect of the present invention is formed by admitting a molding material (or thermoplastic resin) into the cavity 16 through the sprue and gate. Injection molding for this purpose may be accomplished under ordinary conditions (for temperature and pressure) suitable for the molding material used.

After injection molding, the resin pipe is demolded. Demolding is accomplished by withdrawing the auxiliary member 12 and the core 13 from the mold proper 11.

The core 13 is tapered with an adequate angle ($\theta$) so that it can be separated readily from the inner surface of the molded resin pipe 1.

As the core is withdrawn, the molded resin pipe 1 is pushed out by ejector pins (not shown). Thus the molded resin pipe 1 is completely demolded from the mold proper 11.

The above-mentioned injection molding procedure permits efficient demolding and hence efficient production of the resin pipe.

After demolding, the resin pipe undergoes annealing to improve its dimensional stability.

The resin pipe according to the present invention is obtained by injection molding as mentioned above. It varies in wall thickness in the longitudinal direction because of its tapered inner surface. Nevertheless, it is immune to dimensional change due to shrinkage after demolding and is stable in physical properties.

The resin pipe according to the first aspect of the present invention is superior in moldability, free from dimensional change due to difference in wall thickness, and uniform in physical properties. Therefore, it is suitable for use as the cylindrical base for photosensitive drums which needs high dimensional accuracy and electrical conductivity.

The resin pipe of the present invention may be used as a base for a photosensitive drum if a photosensitive layer is formed on its outer surface by coating with a solution of a photosensitive agent and a binder in an organic solvent. The coating process is followed by heat-drying for solvent removal in a predetermined condition of temperature and time.

For the resin pipe of the present invention to be used as the base for photosensitive drums, it should have a photosensitive layer 3 on its outer surface and separately formed flanges 1a and 1b firmed fitted into its both ends, as shown in Fig. 2.

The above-mentioned flanges 1a and 1b differ in diameter. The flange 1a has a larger diameter which matches with the left end of the inner surface, and the flange 1b has a smaller diameter which matches with the right end of the inner surface, as shown in Fig. 2. Except for these flanges, other parts may be constructed in the same way as conventional, as shown in Fig. 15. The flanges 1a and 1b have bearing bushes 25 and the supporting axes 24 are inserted thereinto, so that the resin pipe is rotatably supported. The flange 1b has a driving gear 26 formed thereon, which meshes with a gear 27 connected to a drive motor.

In the case where the resin pipe of the present invention is used as the base for photosensitive drums, the flanges and other parts may be modified as required. For example, the flange 1b with a smaller diameter may be formed integrally with the resin pipe. In addition, it may be incorporated with a reinforcing inorganic filler for improvement in strength and rigidity, if it is to be formed integrally with the driving gear 26.

The resin pipe of the present invention is uniform in physical properties (such as electrical conductivity); therefore, when used as the base for photosensitive drums, it is charged well and has good printing performance.

If the resin pipe of the present invention is to be used as the base for photosensitive drums, it should have a smooth outer surface. The surface roughness is specified in terms of the center line average roughness (Ra) not more than 0.8 μm, particularly not more than 0.2 μm, the maximum height (Rmax) not more than 1.6 μm, particularly not more than 0.8 μm, and the ten-point average roughness (Rz) not more than 1.6 μm, particularly not more than 0.8 μm. With excessively large values of Ra, Rmax, and Rz, the outer surface of the cylindrical base has surface irregularities which manifest themselves through the photosensitive layer formed thereon. Such surface irregularities cause poor images. The above-mentioned desirable surface roughness can be easily achieved even when the above-mentioned electrically conductive resin compound is incorporated with a reinforcing inorganic filler if it contains at least one resin component selected from a polyamide resin obtained from metaxylylenediamine and adipic acid, a polyamide resin obtained from ε-caprolactam, and an alloy resin obtained by blending a polyamide resin with a resin having a water absorption no higher than 0.3%.

The surface roughness specified above for the first aspect of the present invention may also be applied to the second to fourth aspects of the present invention. The explanation of surface roughness will not be repeated in the following description of the second to fourth aspects of the present invention.

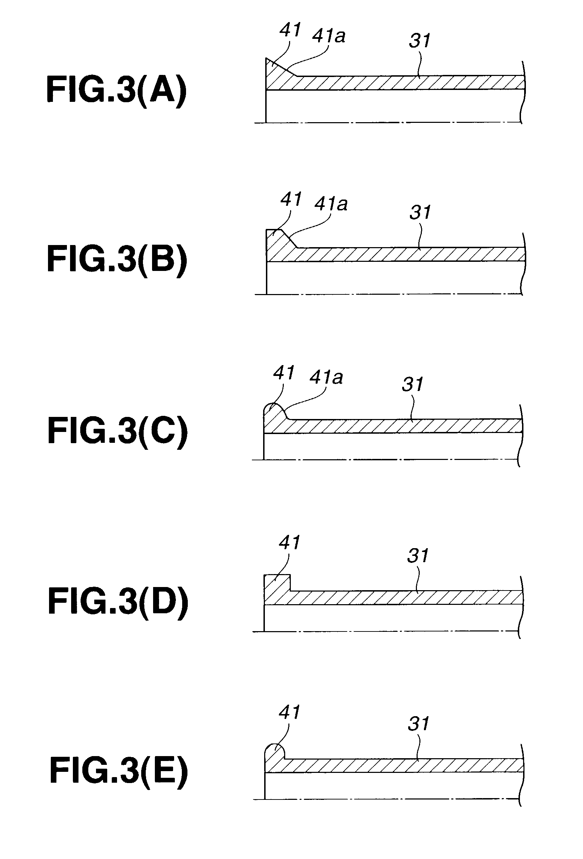

The second object of the present invention is achieved by the resin pipe as shown in Fig. 3. This resin pipe 31 has a projection 41 protruding radially outward from one end of its outer surface.

The projection 41 is usually a continuous flange-like one which is formed on the entire circumference of the end of the outer surface of the resin pipe 31, although it may be one or more discrete ones. In addition, the projection 41 may vary in sectional geometry as shown in Fig. 3, such as triangle (A), trapezoid (B), curved object with a round top and a slope (C), rectangle (D), and semi-sphere (E). (Incidentally, 41a denotes the slope in A, B, and C.)

The resin pipe according to the second aspect of the present invention may be produced under the same conditions as used for the resin pipe according to the first aspect of the present invention. It may be used as the base for photosensitive drums under the same conditions as in the first aspect of the present invention.

According to the second aspect of the present invention, the amount of the electrically conductive material is not specifically restricted; for use as a base for a photosensitive drum, it may range from 5-30 weight%, particularly 5-20 weight%, of the compound. The amount should be such that the resin pipe has a surface resistance not higher than $10^6$ Ω/□, preferably not higher than $10^5$ Ω/□, more preferably not higher than $10^4$ Ω/□, measured according to ASTM D-257.

The resin pipe according to the second aspect of the present invention is obtained by injection molding from the above-mentioned thermoplastic resin or resin compound. It finds use as the base for photosensitive drums. The injection molding is accomplished by the same procedure as mentioned above which is shown in Fig. 6.

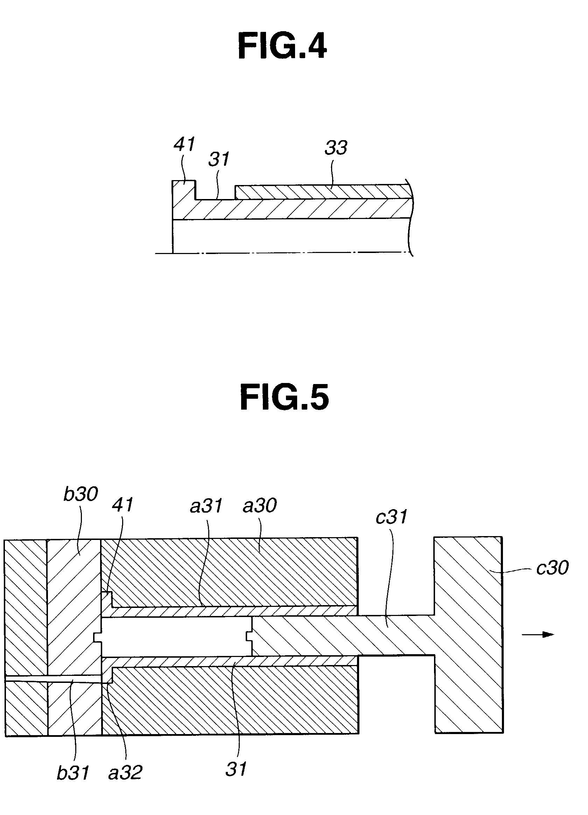

Injection molding for the resin pipe according to the second aspect of the present invention employs a mold as shown in Fig. 5. This mold consists of a stationary plate b30, a first movable plate a30, and a second movable plate c30. The first movable plate a30 has a cylindrical hollow a31 therein. The cylindrical hollow a31 has a circular recess on its periphery adjacent to the stationary plate. This circular recess forms during injection molding a projection 41 protruding radially from the periphery at one end of the resin pipe. This projection 41, engaging with the recess a32 of the first movable plate a30, prevents the resin pipe 31 from being pulled away together with the core c31 when the second movable plate c30 is withdrawn from the first movable plate a30. The advantage of the above-mentioned mold construction is that the core c31 of the second movable plate c30 is easily separated from the resin pipe d30 made of nylon having a comparatively large shrinkage. This ensures smooth operation from injection to demolding, thereby contributing to the efficient production of the resin pipe. Molding conditions (such as pressure and temperature) may be properly adjusted according to the molding material used.

The resin pipe according to the second aspect of the present invention may be used as the cylindrical base for photosensitive drums as in the case of the cylindrical base 81 shown in Fig. 15.

Although the cylindrical base 81 shown in Fig. 15 has the separately molded flanges 82a and 82b firmly fitted into its both ends, it is also possible to form at least either of the flanges 82a and 82b integrally with the cylindrical base 81 which is the resin pipe according to the second aspect of the present invention. In addition, the flange may be formed integrally with the driving gear 86 if the molding material is incorporated with a reinforcing inorganic filler to impart high strength and rigidity as mentioned above.

If the resin pipe according to the second aspect of the present invention is to be used as the base for photosensitive drums, it should have an outer surface with the surface roughness as mentioned in the first aspect of the present invention.

The resin pipe according to the second aspect of the present invention is used as the base for photosensitive drums. To make a photosensitive drum, the base 31 is covered with the photosensitive layer 33, which is formed inside the projection 41 of the resin pipe 1 as shown in Fig. 4. In other words, if the resin pipe of the present invention is to be used as the cylindrical base for photosensitive drums, it is necessary that the overall length of the resin pipe be larger than that required for the image and the projection 41 be formed in the extra part. Alternatively, it is possible to cut off, after demolding, the pipe end at which the projection 41 is formed. Incidentally, the resin pipe according to the second aspect of the present invention is suitable for use as the cylindrical base for photosensitive drums; however, its use is not limited.

According to the third aspect of the present invention, the base 51 for photosensitive drums is characterized by its tapered inner surface 52 to facilitate demolding after injection molding, said tapered inner surface 52 having parts 54, 55 which are parallel to the axis and continuous with the tapered part 53 of the tapered inner surface 52. The parallel parts 54, 55 may be smaller or larger than the tapered inner surface in diameter, respectively.

The cylindrical base for photosensitive drums according to the third aspect of the present invention may be produced under the same conditions as used for the resin pipe according to the second aspect of the present invention.

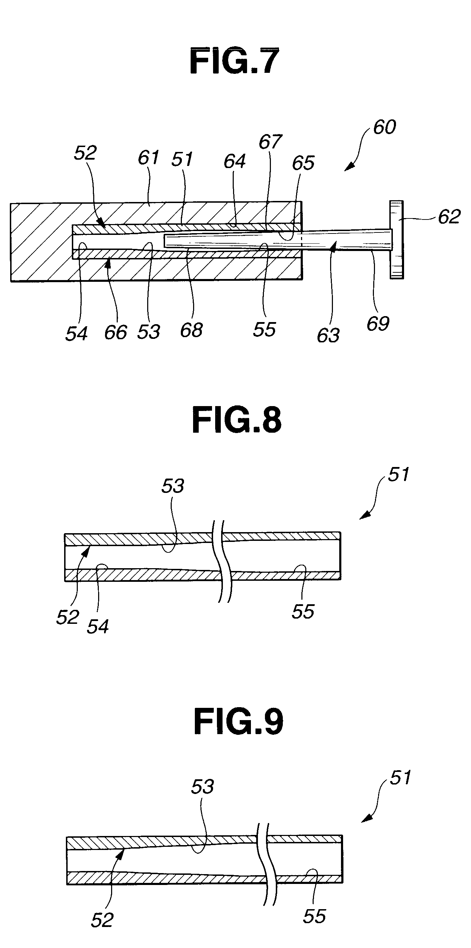

The cylindrical base for photosensitive drums according to the third aspect of the present invention may be produced by the method explained below with reference to Fig. 7. Fig. 7 shows a mold 60 used to produce by injection molding the cylindrical base 51 for photosensitive drums according to the present invention. The mold 60 consists of a mold proper 61, an auxiliary member 62, and a core 63. The mold proper 61 has a cylindrical hollow therein. The auxiliary member 62 comes into contact with one end of the mold proper 61 so as to close the opening of the cylindrical hollow. The core 63 is movable in the axial direction so that it is inserted into the cylindrical hollow. As the core 63 enters the cylindrical hollow in the mold proper 61, a cylindrical cavity 66 is formed between the inner surface 64 of the cylindrical hollow and the outer surface of the core 65. During injection molding, a molding material is admitted into the cavity 66.

The cylindrical base 51 for photosensitive drums according to the third aspect of the present invention has a tapered part 53 which facilitates demolding in inner surface thereof. In addition, the tapered inner surface has, at its openings in which the flanges are fitted, those parts 54 and 55 which are parallel to the axis and have uniform diameters. The parallel parts 54 and 55 are longer than the extent to which the flanges are inserted, and have uniform diameters. The tapered part 53 and the parallel parts 54 and 55 are formed by the outer surface 65 of the core 63.

According to the third aspect of the present invention, it is necessary that at least either of the parallel parts 54 and 55 have a length which is within the extent to which the flange is inserted. This length should be sufficient for the flange to be firmly fitted into the injection-molded cylindrical base. To be specific, the length should be 1.1-1.5 times, particularly 1.2-1.5 times, the extent to which the flange is inserted. With an excessively short length, the parallel part causes the flange to be distorted when the flange is provided with the driving gear. Hence the driving gear is out of alignment with the axis of the cylindrical base. With an excessively long length, the parallel part prevents the driving gear from being mounted at an adequate position. This leads to waste of material, increased cost, and poor workability. Incidentally, in the case where the parallel part is formed at one end of the cylindrical base, the flange and gear are attached to this parallel part.

The base for photosensitive drums according to the third aspect of the present invention has a tapered inner surface, except for the parallel parts, to facilitate demolding. It may be produced under the same conditions as those in the first aspect of the present invention, but the conditions may be modified without restrictions.

In the cylindrical base for photosensitive drums according to the third aspect of the present invention, the tapered inner surface and the parallel parts are formed in conformity with the outer surface 65 of the core 63 used for injection molding. The outer surface 65 of the core 63 has a tapered part 67 so as to facilitate demolding, and it also has a parallel part 68 (of smaller diameter) and a parallel part 69 (of larger diameter) respectively at both ends thereof. These parallel parts correspond respectively to the parallel parts 54 (of smaller diameter) and 55 (of larger diameter) of the inner surface of the cylindrical base according to the present invention. The example shown in Fig. 7 has the parallel parts at both ends thereof; however, it is also possible that the parallel part is formed only at one end into which the flange (provided with the driving gear) is inserted.

The above-mentioned mold 60 has, as in any known mold, other components such as sprue, gate, and ejector pin, which are not shown in the figure.

The procedure of forming the cylindrical base 51 for photosensitive drums by means of the above-mentioned mold 60 consists of inserting the core 63 into the cylindrical hollow of the mold proper 61 such that the auxiliary member 62 closes the opening of the cylindrical hollow and the forward end of the core 63 comes into contact with the bottom of the cylindrical hollow, thereby forming the cavity 66 (having the tapered part and parallel parts), and admitting a molding material (such as thermoplastic resin) into the cavity 66 through the sprue and gate. The molding conditions (pressure and temperature) should be properly set up according to the molding material used.

After injection molding, the cylindrical base 51 for photosensitive drums is demolded. Demolding is accomplished by withdrawing the auxiliary member 62 and the core 63 outward from the mold proper 61. Since the inner surface of the cylindrical base 51 is tapered at its central part, the core 63 can be pulled off easily even when the inner surface 52 of the cylindrical base is in close contact with the outer surface 65 of the core 63.

As the core is withdrawn, the cylindrical base 51 for photosensitive drums is pushed out by ejector pins disposed at predetermined positions (not shown). Thus the cylindrical base 51 is completely removed from the mold proper 61.

After demolding, the cylindrical base for photosensitive drums undergoes annealing to improve its dimensional stability.

The cylindrical base obtained as mentioned above is used for any known photosensitive drums if a photosensitive layer is formed on its outer surface by coating with a solution of a photosensitive agent and a binder in an organic solvent. The coating process is followed by heat-drying for solvent removal in a predetermined condition of temperature and time.

The cylindrical base for photosensitive drums is put to use after the flanges (which are connected to the gear) are fitted into the parallel part of the inner surface 52 which is formed by injection molding.

The fitting of the flanges may be accomplished in the usual way. According to the present invention, the parallel part is longer than the extent to which the flange is inserted, so that the flanges are fitted stable and the fitted flanges do not come off. Subsequently, one of the flanges is provided with a gear. Since the flange is firmly fitted, it is possible to arrange the gear accurately in alignment with the center line of the cylindrical base.

Either of the two flanges fitted into both ends of the cylindrical base may be replaced by one which is formed integrally with the cylindrical base in the usual way. Such a flange should preferably be formed at the parallel part having a smaller diameter so that the cylindrical base is demolded easily from the core. In addition, the flange may be formed integrally with the driving gear because the molding material has high strength and rigidity if it is incorporated with the above-mentioned reinforcing inorganic filler. In this case, too, the gear should be formed on the flange at the parallel part having a smaller diameter.

The cylindrical base for photosensitive drums according to the third aspect of the present invention should have an outer surface whose surface roughness is specified as in the first aspect of the present invention.

The fourth object of the present invention is achieved by the resin pipe as mentioned above. This resin pipe consists of a cylindrical resin pipe proper, a resin flange formed integrally with said resin pipe proper at at least one end thereof, and a driving gear which is formed integrally with said flange. The fourth aspect of the present invention is characterized in that the resin pipe proper is formed from a molding material which is different from the one used for the driving gear or the flange having the driving gear formed integrally therewith.

Since the above-mentioned driving gear meshes with a gear connected to a drive source such as a motor, it needs good wear resistance. In the present invention, therefore, the driving gear should be formed from a molding material having good wear resistance which is different from the one used for the resin pipe proper. Although the flange may be formed from the same material as used for the resin pipe proper, it should preferably be formed from a different material superior in rigidity and wear resistance because it slides on the supporting axle and hence needs good wear resistance. Such a material is the same one as used for the driving gear.

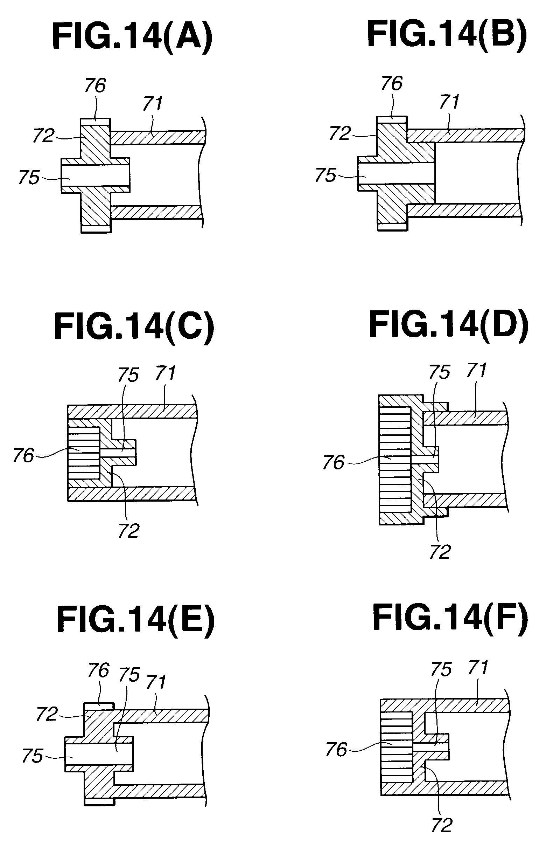

According to the fourth aspect of the present invention, there are several ways of joining to the resin pipe proper the driving gear or the flange having the driving gear formed thereon, as shown in Figs. 14(A) to 14(F). In Fig. 14(A), the flange 72 having the driving gear 76 on its outer periphery is joined to one end of the pipe proper 71. In Fig. 14(B), the flange 72 having the driving gear 76 on its outer periphery is joined to the inner surface of the pipe proper 71 at its end. In Fig. 14(C), the flange 72 having the driving gear 76 on its inside periphery is joined to the inner surface of the pipe proper 71 at its end. In Fig. 14(D), the flange 72 having the driving gear 76 on its inside periphery is joined to the outer surface of the pipe proper 71 at its end. In Figs. 14(A) to 14(D), the flange 72 and the driving gear 76 are formed from the same material which is different from the material used for the resin pipe proper 71. In Fig. 14(E), the pipe proper 71 and the flange 72 are formed integrally from the same material and the driving gear, which is formed from a different material, is joined to the outer surface of the flange 72. In Fig. 14(F), the pipe proper 71 and the flange 72 are formed integrally from the same material and the driving gear, which is formed from a different material, is joined to the inside periphery of the flange 72.

The method of joining together the pipe 71 and the flange 72 or the flange 72 and the driving gear 76 (which are formed from different materials) is not specifically restricted. Joining may be accomplished by two-color molding or insert molding. In the case of insert molding, the flange 72 is molded previously and set in the mold and then the pipe proper 71 is molded integrally with it. Alternatively, the pipe proper 71 is previously molded and set in the mold and then the flange 72 is molded integrally with it. In the case where the driving gear 76 is formed from a different material as shown in Figs. 14(E) and 14(F), the pipe proper 71 having the flange 72 is previously formed and set in the mold and then the driving gear 76 is formed integrally with the flange 72.

Incidentally, the pipe proper 71 and the flange 72 may be previously formed by injection molding in the usual way. Conditions for injection molding, two-color molding, and insert molding should be established according to the molding material used.

The pipe proper 71 may be formed under the same conditions as used in the second aspect of the present invention.

The resin material from which the above-mentioned flange 72 and/or the driving gear 76 are formed is not specifically restricted so long as it is suitable for injection molding and provides rigidity and wear resistance required of them. Examples of the resin material include polyacetal, polyamide (such as PA6, PA66, PA11, PA12, PA46, and aromatic PA), polyurethane, polyester, polyethylene, polypropylene, polycarbonate, polybutylene terephthalate, polyphenylene sulfide, polyamideimide, and polyimide. They may be used alone or in combination with one another. Polyamide, polyurethane, and polyester may be in the form of elastomer.

The flange 72 and/or the driving gear 76 are formed from a resin material which is usually incorporated with a conducting material to impart electrical conductivity. Examples and amounts of the conducting material are the same as those used in the first aspect of the present invention. The resin material may also be incorporated with a reinforcing filler and other additives in adequate amount according to need as in the case of the above-mentioned pipe proper. Such additives include lubricant, flame retardant, and anti-static agent.

In the cylindrical base for photosensitive drums according to the fourth aspect of the present invention, the flange 72 and/or the driving gear 76 are integrally formed from different materials by two-color molding or insert molding and they are fitted into at least one end of the pipe proper 71. The flange to be fitted into the other end of the pipe proper 71 may be formed separately as in the conventional technology.

According to the fourth aspect of the present invention, the above-mentioned pipe proper 71 finds use as the cylindrical base for photosensitive drums and is made into a photosensitive drum by coating its outer surface with a photosensitive layer. The photosensitive layer may be formed from any known material by any known method, and its layer structure may be any known one. The structure of the photosensitive drum may be the same as that of ordinary one.

EXAMPLES

The invention will be described in more detail with reference to the following examples and comparative examples which are not intended to restrict the scope thereof.

Example 1 and Comparative Examples 1 and 2

An electrically conductive resin compound having the following composition was prepared in the usual way. It was made into a cylindrical base for photosensitive drums, measuring 30 mm in outside diameter and 230 mm in length, by injection molding. This cylindrical base has a tapered inner surface, the taper angle ($\theta$) being given in terms of tan $\theta$ in Table 2. The cylindrical base was examined for demolding performance and physical properties. In comparative examples, the same experiment as above was repeated except that the core was replaced by the one having a different taper angle. Composition of electrically conductive compound:

Nylon-66 ("Novamide" from Mitsubishi Enpura) 50 weight%
C/B ("Ketjen black" from Lion) 15 weight%
Potassium titanate whisker fiber ("Dentol" from Otsuka Kagaku) 15 weight%
Nylon MXD6 ("Reny" from Mitsubishi Enpura) 20 weight%

The resulting cylindrical base was allowed to stand at 120°C for 60 minutes and then allowed to cool. The ends (designated as A and B) of the sample were measured for surface resistance (according to ASTM D-257) and outside diameter. The samples were rated in terms of the measured values. The results are shown in Table 2.

Table 2

|  | tan $\theta$ | Moldability | Surface resistance ($\Omega/\square$) | | Outside diameter (mm) | | Overall rating |
|---|---|---|---|---|---|---|---|
|  |  |  | End A | End B | End A | End B |  |
| Example 1 | $2.0\times10^{-3}$ | Good | $2.0\times10^{4}$ | $2.5\times10^{4}$ | 29.96 | 29.96 | Good |
| Comparative Example 1 | 0 | Unable to demold | $2.8\times10^{4}$ | $2.6\times10^{4}$ | 29.95 | 29.94 | Poor moldability |
| Comparative Example 2 | $5.0\times10^{-3}$ | Good | $1.3\times10^{4}$ | $1.3\times10^{6}$ | 29.95 | 29.87 | Uneven physical properties |

It is noted from Table 2 that the resin pipe according to the present invention permits easy demolding, varies very little in surface resistance depending on difference in wall thickness, and retains good dimensional accuracy without change in outside diameter at its ends. By contrast, the resin pipe in Comparative Example 1 was incapable of demolding because of the small value of tan θ. The resin pipe in Comparative Example 2 was capable of demolding easily because of the large value of tan θ ; however, it varied in surface resistance and had poor dimensional accuracy, with the outside diameter fluctuating at its ends.

Examples 2 to 7

An electrically conductive resin compound having the following composition was prepared in the usual way. It was made by injection molding into a cylindrical base for photosensitive drums, measuring 30 mm in outside diameter and 230 mm in length, as schematically shown in Figs. 8 to 13. This cylindrical base has the shape as described below. In comparative examples, the same experiment as above was repeated except that the core was replaced. Incidentally, the length of the parallel part is 1.2 times the extent to which the flange is inserted.

Composition of electrically conductive compound:

Nylon-66 ("Novamide" from Mitsubishi Enpura) 50 weight%
C/B ("Ketjen black" from Lion) 15 weight%
Potassium titanate whisker fiber ("Dentol" from Otsuka Kagaku) 15 weight%
Nylon MXD6 ("Reny" from Mitsubishi Enpura) 20 weight%

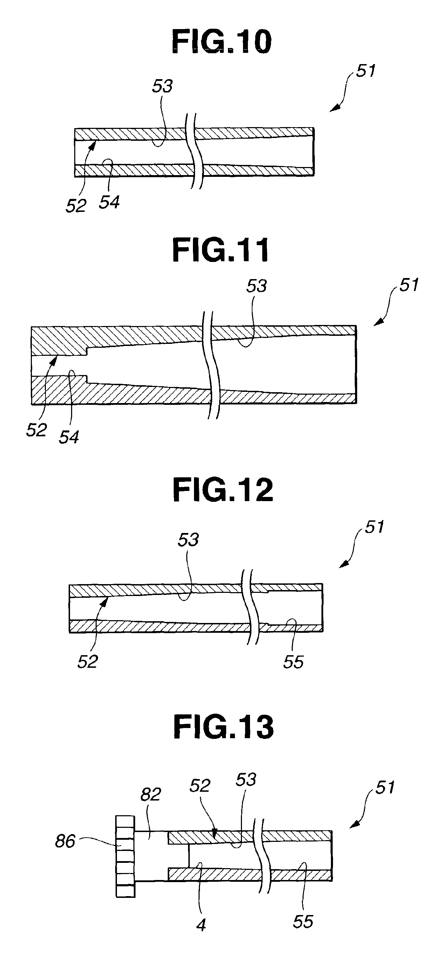

The resulting cylindrical base was allowed to stand at $120°$C for 60 minutes for annealing.
Each of the cylindrical bases shown in Figs. 8 to 12 was provided with a flange of the same shape at its parallel part, and this flange was provided with a gear. The cylindrical base shown in Fig. 13 was provided with a flange which is formed integrally with a gear.

Description of the base for photosensitive drums:

The one in Example 2 (shown in Fig. 8) has the parallel parts at its both ends. The parallel part with a small diameter is 15 mm long and the parallel part with a large diameter is 15 mm long. The taper angle (θ) is defined by tan θ = $2.0 \times 10^{-3}$.
The one in Example 3 (shown in Fig. 9) has the parallel part at its one end. The parallel part with a large diameter is 15 mm long. The taper angle (θ) is defined by tan θ = $2.0 \times 10^{-3}$.
The one in Example 4 (shown in Fig. 10) has the parallel part at its one end. The parallel part with a small diameter is 15 mm long. The taper angle (θ) is defined by tan θ = $2.0 \times 10^{-3}$.
The one in Example 5 (shown in Fig. 11) has the parallel part at its one end. The parallel part with a small diameter is 15 mm long. The taper angle (θ) is defined by tan θ = $2.0 \times 10^{-3}$. There is a step (2 mm) at the boundary between the tapered part and the parallel part.
The one in Example 6 (shown in Fig. 12) has the parallel part at its one end. The parallel part with a large diameter is 15 mm long. The taper angle (θ) is defined by tan θ = $2.0 \times 10^{-3}$. There is a step (2 mm) at the boundary between the tapered part and the parallel part.
The one in Example 7 (shown in Fig. 13) has a flange formed integrally with a gear. This flange is fitted into the parallel part. The parallel part with a small diameter is 15 mm long. The taper angle (θ) is defined by tan θ = $2.0 \times 10^{-3}$.
The first aspect of the present invention covers a resin pipe which has a tapered inner surface, the taper angle (θ) being defined by $0.5 \times 10^{-3}$ < tan θ < $3.5 \times 10^{-3}$. The resin pipe is characterized by ability to be demolded easily, good moldability, good dimensional stability, and uniform physical properties. It is suitable for use as the base for photosensitive drums.
The second aspect of the present invention covers a resin pipe and a method for producing said resin pipe. This method permits the resin pipe to be demolded smoothly and hence contributes to efficient production of the resin pipe.
The third aspect of the present invention covers a base for photosensitive drums. This base is characterized by easy demolding and good moldability. It permits a gear to be fixed in alignment with its center axis stably so as to use with good workability.
The fourth aspect of the present invention covers a base for photosensitive drums and a photosensitive drum constructed from said base. The photosensitive drum is characterized by its good continuity and light weight. It can be produced easily at low price because of its good workability. The base is useful for producing high-performance photosensitive drum at low price.

**Claims**

1. A resin pipe which is formed by injection molding from a thermoplastic resin or a resin compound based on a thermoplastic resin, wherein said resin pipe has a tapered inner surface to facilitate demolding such that the taper angle ($\theta$) satisfies the following equation.

$$0.5 \times 10^{-3} < \tan \theta < 3.5 \times 10^{-3}$$

2. The resin pipe as defined in Claim 1, which is an electrically conductive resin pipe formed by injection molding from an electrically conductive resin compound composed of a thermoplastic resin and a conducting material dispersed therein.

3. The resin pipe as defined in Claim 1, which is formed from a resin compound containing at least one resin component selected from a polyamide resin obtained from metaxylylenediamine and adipic acid, a polyamide resin obtained from $\varepsilon$-caprolactam, and an alloy resin obtained by blending a polyamide resin with a resin having a water absorption no higher than 0.3%.

4. The resin pipe as defined in Claim 1, which contains a reinforcing inorganic filler dispersed therein.

5. The resin pipe as defined in Claim 1, which is a base for a photosensitive drum.

6. A resin pipe formed by injection molding from a thermoplastic resin or a resin compound based on a thermoplastic resin, said rein pipe having an integrally molded projection radially protruding outward from one end of its outer surface.

7. The resin pipe as defined in Claim 6, wherein the projection is a flange-like one formed on the entire circumference of one end of the outer surface.

8. The resin pipe as defined in Claim 6, which is a cylindrical base for the photosensitive drum to be mounted in electrophotographic apparatus or electrostatic recording apparatus.

9. The resin pipe as defined in Claim 6, which is formed from a resin compound containing as the thermoplastic resin at least one species selected from a polyamide resin obtained from metaxylylenediamine and adipic acid, a polyamide resin obtained from $\varepsilon$-caprolactam, and an alloy resin obtained by blending a polyamide resin with a resin having a water absorption no higher than 0.3%.

10. A method of producing a resin pipe by injection molding which employs a mold consisting of a first movable plate having therein a cylindrical hollow with open ends, a stationary plate having a sprue for injection of molten resin therethrough, and a second movable plate having a cylindrical core, such that, when in operation, said first movable plate comes into contact with said stationary plate and said cylindrical core enters said cylindrical hollow in said first movable plate, thereby forming a cylindrical cavity between the inner surface of said first movable plate and the outer surface of said core, said injection molding consisting of the steps of injecting a molten resin into said cavity, thereby forming a resin pipe and demolding the thus formed resin pipe by separating said second movable plate from said first movable plate in such a way that said core is pulled away from said resin pipe and separating said first movable plate from said stationary plate, while the resin pipe being held by said stationary plate, said method being characterized in that said cylindrical hollow in said first movable plate has a circular recess on its periphery adjacent to said stationary plate, said circular recess forms during injection molding a projection protruding radially from the periphery at one end of said resin pipe, said projection preventing said resin pipe from being pulled away together with the core when said second movable plate is separated from said first movable plate.

11. A cylindrical base for photosensitive drums which is obtained by injection molding from a thermoplastic resin or a resin compound based on a thermoplastic resin, said cylindrical base having a flange fitted into at least one end thereof to close it, said flange meshing with a gear to drive said cylindrical base, characterized in that said cylindrical base has a tapered inner surface to facilitate demolding after injection molding, said tapered inner surface having a part which is parallel to the axis, uniform in diameter, and slightly longer than that part of the flange which is fitted into the base.

12. The cylindrical base for photosensitive drums as defined in Claim 11, which has a flange formed integrally with one opening thereof.

13. The cylindrical base for photosensitive drums as defined in Claim 11, in which the flange formed integrally with one opening thereof is provided with a driving gear.

14. The cylindrical base for photosensitive drums as defined in Claim 11, which is an electrically conductive base formed by injection molding from an electrically conductive resin compound composed of a thermoplastic resin and a conducting material dispersed therein.

15. The cylindrical base for photosensitive drums as defined in Claim 11, in which the resin compound contains as a component a polyamide resin obtained from metaxylylenediamine and adipic acid and/or a polyamide resin obtained from ε-caprolactam.

16. The cylindrical base for photosensitive drums as defined in Claim 11, in which the resin compound contains a reinforcing inorganic filler dispersed therein.

17. A cylindrical base for photosensitive drums which has at least one end thereof a resin flange formed integrally therewith, said flange having a driving gear formed integrally therewith, characterized in that said driving gear or said flange having said driving gear formed integrally therewith is formed from a resin material which is different from that from which said resin pipe is formed.

18. The cylindrical base of photosensitive drums as defined in Claim 17, wherein said resin pipe proper and said driving gear or said flange having said driving gear formed integrally therewith are formed by two-color molding or insert molding.

19. The cylindrical base for photosensitive drums as defined in Claim 17, wherein the resin pipe proper is formed from a resin material containing at least one species selected from a polyamide resin obtained from metaxylylenediamine and adipic acid, a polyamide resin obtained from ε-caprolactam, and an alloy resin obtained by blending a polyamide resin with a resin having a water absorption no higher than 0.3%.

20. The cylindrical base for photosensitive drums as defined in Claim 17, wherein said driving gear or said flange having said driving gear formed integrally therewith is formed from a resin material which contains one or more species selected from polyacetal, polyamide, polyurethane, polyester, polyethylene, polypropylene, polycarbonate, polybutylene terephthalate, polyphenylene sulfide, polyamideimide, and polyimide.

21. A photosensitive drum consisting of a cylindrical base and a photosensitive layer coated on the outer surface thereof, characterized in that said cylindrical base is formed from the cylindrical base for photosensitive drum as defined in Claim 17.

# FIG.1

# FIG.2

**FIG.3(A)**

**FIG.3(B)**

**FIG.3(C)**

**FIG.3(D)**

**FIG.3(E)**

# FIG.4

# FIG.5

**FIG.6(A)**

**FIG.6(B)**

**FIG.6(C)**

**FIG.6(D)**

# FIG.7

# FIG.8

# FIG.9

# FIG.10

# FIG.11

# FIG.12

# FIG.13

**FIG.14(A)**

**FIG.14(B)**

**FIG.14(C)**

**FIG.14(D)**

**FIG.14(E)**

**FIG.14(F)**

# FIG.15

# FIG.16